# EUROPEAN PATENT APPLICATION

(11) **EP 1 870 290 A1**
(43) Date of publication of application: **26.12.2007**
(21) Application number: 06012840.2
(22) Date of filing: 22.06.2006
(51) Int. Cl.: B60R 19/42

(54) **Side bar**

(71) Applicant: Progress Europe Automotive Innovations B.V., 8171 NT Vaasen (NL)
(72) Inventor: Van de Put, Liesbertus, 7341 PB Beemte Broekland (NL)
(74) Representative: 't Jong, Bastiaan Jacob

(57) **Abstract**

The invention relates to a device (2) for protecting a side of a vehicle, such as a van, which device comprises;
- an elongate protection element (6)
- at least one mount (7) for mounting the protection element to the vehicle
wherein
the device comprises at least one deformation zone for absorbing impact energy to protect the vehicle.

## Description

The invention relates to a device for protecting a side of a vehicle such as a van, which device comprises;
- an elongate protection element
- at least one mount for mounting the protection element to the vehicle.

Vehicles, in particular vans, which are used intensively for example to deliver mail and packages have a higher risk for damage to the body work. A driver arrives at a large number of delivery points, which each have their specific parking situation. The driver needs to assess each situation every time to make sure the driver will not damage the vehicle by overlooking for example a small pillar.

Damage by a small accident is prevented at the front and the back of a vehicle by the bumper. However on both sides of the vehicle no bumper is present and when a driver makes a turn too sharp the vehicle could be damaged substantially.

It is common to arrange side bars to the vehicle to prevent damage to the body work of the vehicle by accidentally overlooking some object. These side bars, which are known in the state of the art, comprise a rod or heavy pipe, which is arranged fixedly to the chassis of the vehicle. Such a known side bar is embodied very heavily such that it will protect the side of a vehicle from high impact.

However, the disadvantage of such a side bar according to the state of the art is that it will transfer the impact energy directly to the chassis of the vehicle without absorbing any energy. Current vehicles are not designed to take all the energy by the chassis and when the vehicle inadvertently hits for example a pillar, the chassis could bend which would be very difficult to repair and would incur high costs. In such a case it would be better if the side of the body work of the vehicle would be damaged.

It is therefor an object of the invention to provide a side bar which limits the amount of impact energy transferred to the chassis of the vehicle.

This object is achieved by a device according to the preamble, which is characterized in that the device comprises at least one deformation zone for absorbing impact energy to protect the vehicle.

The deformation zone absorbs impact energy, such that only a portion of the impact energy is transferred to the chassis of the vehicle. This reduces the chance on a bend chassis.

In a preferred embodiment of the device according to the invention the protection element comprises a deformation zone. Instead of a rigid rod or tube as known from the prior art, the protection element comprises a deformation zone such that impact energy is absorbed by the protection element and not transferred to the chassis of the vehicle.

Preferably, the elongate protection element is an extrusion element. By extruding, an elongate element can be cost-effectively made and also the cross section of such an elongate element can be made complex, which enables the arrangement of a deformation zone.

In another preferred embodiment of the device according to the invention the protection element has in cross section collapsible chambers to absorb the impact energy. These chambers function more like as card board boxes, which provide certain strength, but by exceeding a certain load, the boxes collapse and absorb energy.

The absorption of energy can be determined by providing an internal wall in the protection element, which internal wall will buckle upon absorbing impact energy. The protection element will transfer forces directly onto the chassis and only after a certain limit is exceeded, the protection element will start to deform and the internal wall will start to buckle, absorbing part of the impact energy. By designing the dimensions of the internal wall, the limit at which the internal wall starts to buckle can be calculated. This defines which amount of the forces and energy will be transferred to the chassis of the vehicle and which part will be absorbed.

Preferably the protection element has a curved outer surface. An outer surface bends easily when a force is applied in comparison to a flat surface, which needs to buckle to absorb energy. By providing curved outer surfaces, the limit at which the protection element starts to absorb energy is mainly determined by the internal walls, which buckle. It is clear that besides absorbing energy by the buckling internal wall, the outer surfaces and other parts of the protection element will absorb energy as soon as they start to deform.

In another preferred embodiment of the device according to the invention, the protection element comprises at least one groove and comprises an elastic strip which is arranged in the groove. This groove can be arranged at the side of the protection element providing a soft protection such that the side bar itself is not damaged when something touches the side bar, but the groove can also be arranged on top of the side bar to provide a step which will assist the driver in entering the vehicle.

In still another embodiment of the device according to the invention the at least one mount comprises a deformation zone. Instead or in combination with the deformation zone of the protection element, the energy can also be absorbed in the mount. If used in combination this increases the amount of energy, which can be absorbed by the device. If the mount only comprises the deformation zone this ensures that the protection element stays undamaged after an impact and will not decrease the appearance of the vehicle.

In a preferred embodiment of the device according to the invention the at least one mount has a rigid portion and a deformable portion. The rigid portion can be used to arrange the mount to the chassis, while the deformable portion absorbs the energy. This ensures that after impact the mount can still easily be disassembled from the chassis and will not be hindered by deformed parts.

Preferably the deformable portion comprises a collapsible chamber to absorb the impact energy.

In still another embodiment of the device according to the invention the at least one mount is L-shaped. This provides for an easy mounting of the device to the chassis of a vehicle. Preferable the deformation zone is arranged at the intersection of the two legs of the L-shape. Upon impact the L-shaped mount will bend and function like a hinge still absorbing energy.

It is further preferred if the deformation zone comprises a concave outer surface. This concave outer surface will easily collapse upon impact and will define the direction in which the L-shaped mount will deform.

The invention further relates to a vehicle comprising a chassis and a device according to the invention, wherein the device is mounted to the chassis.

In an embodiment of the vehicle according to invention the chassis integrated with a body work.

These and other advantages of the invention will be elucidated in conjunction with the accompanying drawings.

Figure 1 shows in side view a vehicle according to the invention with a device according to the invention.

Figure 2 shows in perspective view the device according to the invention as shown in figure 1.

Figure 3 shows a second perspective view of the device according to figure 2.

Figure 4 shows an exploded view of the device according to figure 2.

Figures 5A and 5B show the device according to figure 2 before and after an impact.

Figure 6 shows a cross-sectional view of the protection element of the device according to figure 2.

Figure 7 to 10 show cross-sectional views of different embodiments of the protection element.

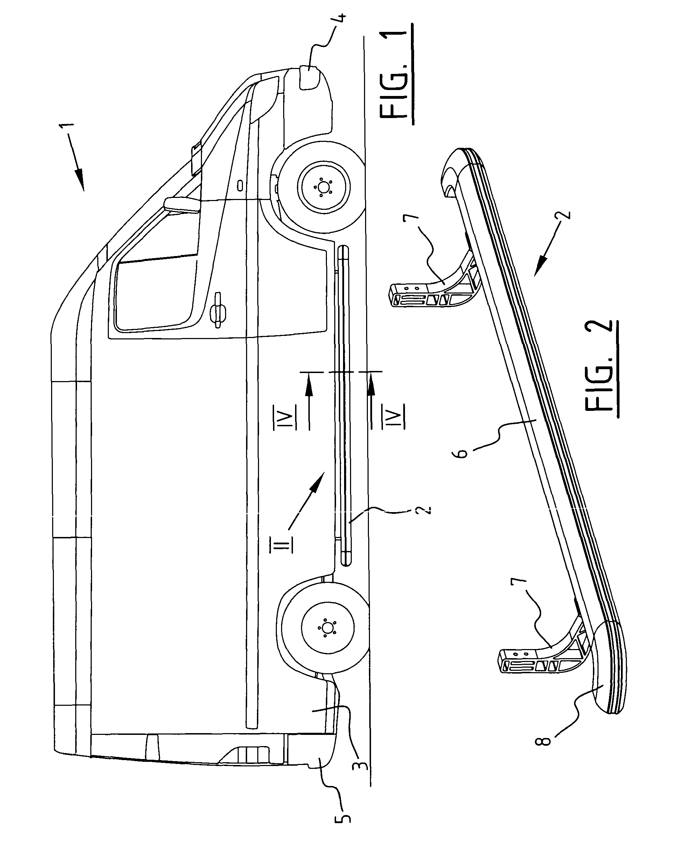

Figure 1 shows a side view of a vehicle 1 having a device 2 according to the invention. This device 2 is arranged on the side of the body work 3 of the vehicle 1. It is however possible to arrange such a device according to the invention at the front 4 or at the back 5.

In figure 2 the device 2 according to the invention is shown in perspective view. The device 2 comprises a protection element 6 and two mounts 7. At both ends of the protection element 6 two end parts 8 are arranged, which provide some protection to the ends of the protection element and also provide for a better appearance.

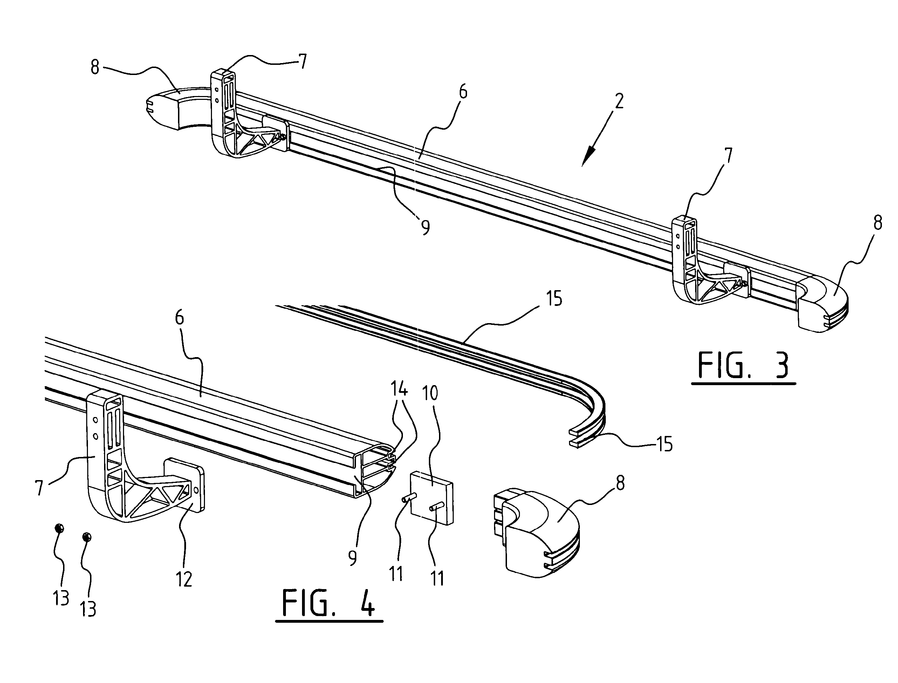

In figure 3 the side bar 2 is shown in perspective view from a different angle. The protection element 6 is provided with a groove 9 in which the mounts 7 are mounted.

Figure 4 shows an exploded view of figure 3. The protection element 6 has the groove 9 in which a mounting plate 10 can be slid. This mounting plate 10 has two ends of thread 11 on which the mounting plate 12 of the mount 7 can be bolted by nuts 13. The protection element 6 and the end portion 8 are both further provided with two grooves 14 in which two elastic strips 15 are arranged. These elastic strips protect the protection element 6 from scratches and so on.

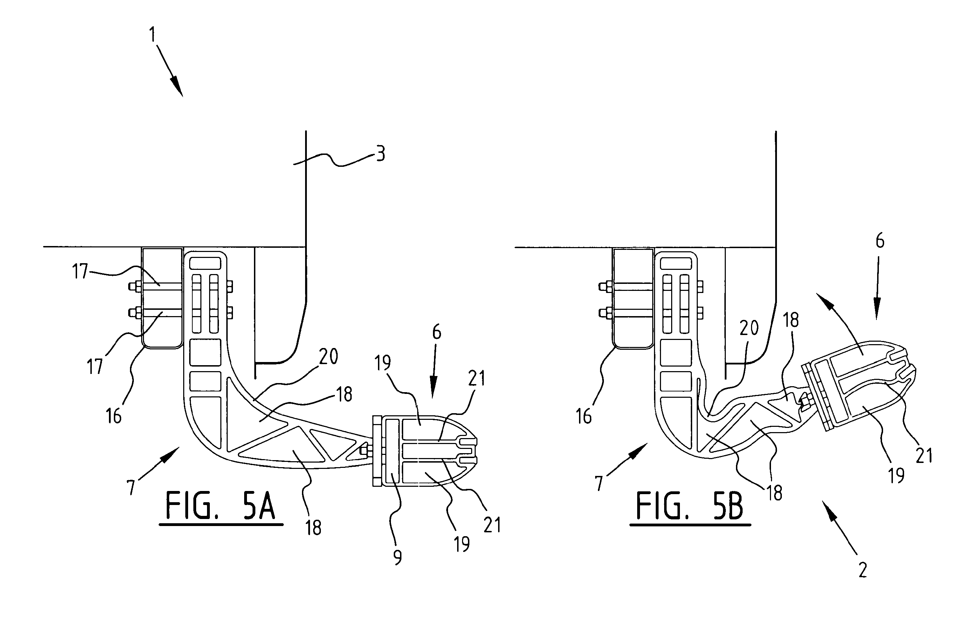

In figure 5A a cross-sectional view of the vehicle 1 is shown. The body work 3 is supported by the chassis 16 of the vehicle 1. Onto this chassis 16 the L-shaped mount 7 is bolted with bolts 17. The protection element 6 is arranged to the mount 7.

Both the mount 7 and the protection element 6 are provided with deformable chambers 18, 19. These chambers are designed such that when subjected by force the chambers will deform and absorb energy. The vertical portion of the mount 7 is designed much stronger and stays rigid upon an impact.

The mount 7 comprises a concave outer surface 20.

The protection element 6 has two inner walls 21, which are designed to buckle upon impact.

Figure 5B shows the device 2 after an impact. As is clear the vertical portion of the mount 7 is rigid, while the chambers 18 of the mount 7 have collapsed and have absorbed energy. Also the inner wall 21 of the protection element 6 has buckled such that the chamber 19 has partly collapsed and absorbed energy.

As is clear from figure 5B all the impact energy has been absorbed by either the protection element 6 or the mount 7. The chassis 16 is not damaged and only the device 2 has to be repaired.

The concave outer surface 20 of the mount 7 is also deformed and has guided the direction of deformation of the mount 7. By providing such an element during the design process it is possible to predict the direction of deformation.

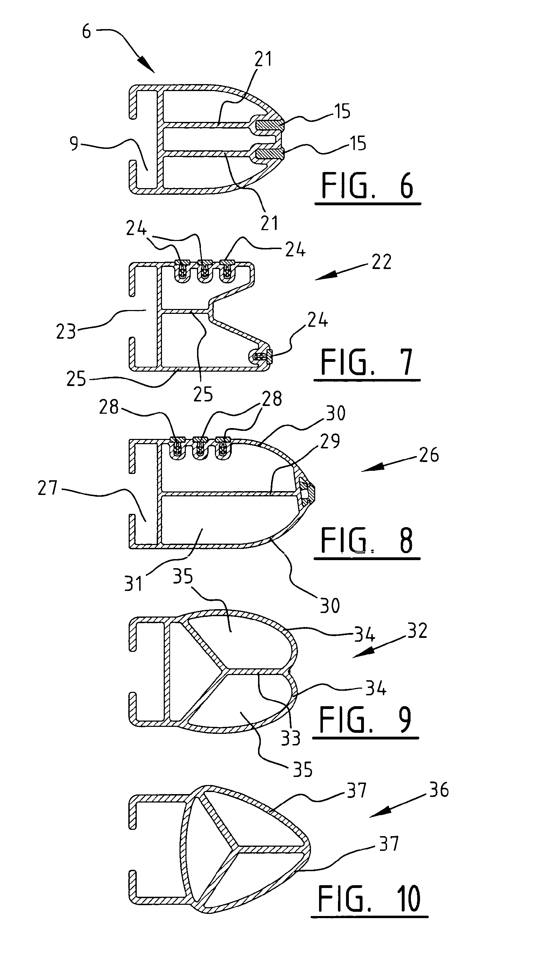

Figure 6 shows a cross-sectional view of the protection element 6 of the previous figures.

Figure 7 shows a second embodiment 22 of a protection element according to the invention. The protection element 22 has a groove 23 for mounting a mount 7 and furthermore three grooves 24 with embedded elastic strips at the top and a groove at the side. The elastic strips 24 provide a friction surface such that the protection element 22 can be used as a step for entering the vehicle.

The protection element 22 has two straight walls 25, which will buckle upon impact. This buckling will absorb part of the impact energy.

In figure 8 a third embodiment 26 of a protection element is shown. This protection element 26 also comprises a groove 27 for mounting the protection element 26 to the mount 7. Again on top of the protection element three grooves with embedded elastic strips 28 are provided.

An internal wall 29 provides a buckling element and assist in absorbing energy. Also the curved outer surfaces 30 of the protection element 26 assist in absorbing energy by providing collapsible chambers 31.

Figure 9 shows a fourth embodiment of a protection element according to the invention. This protection element 32 has a star-shaped inner wall 33. This star-shaped wall defines together with the outer surfaces 34 two collapsible chambers 35.

Figure 10 shows a fifth embodiment 36 of a protection element according to the invention. This embodiment 36 is almost identical to the embodiment 32 shown in figure 9. Only the outer surfaces 37 are in shape differently and will provide a slight different characteristic of deformation upon impact.

As is clear a number of cross-sections is possible for the protection element according to the invention. Depending on the desired appearance and necessary absorption of energy the outer and inner structure of the protection element can be designed.

## Claims

1. Device for protecting a side of a vehicle, such as a van, which device comprises;
- an elongate protection element
- at least one mount for mounting the protection element to the vehicle
**characterized in that**,
the device comprises at least one deformation zone for absorbing impact energy to protect the vehicle.

2. Device according to claim 1, wherein the protection element comprises a deformation zone

3. Device according to claim 1 or 2, wherein the elongate protection element is an extrusion element.

4. Device according to claim 2 or 3, wherein the protection element has in cross-section collapsible chambers to absorb impact energy.

5. Device according to claim 4, wherein the protection element has an internal wall, which will buckle upon absorbing impact energy.

6. Device according to claim 5, wherein the protection element has a curved outer surface.

7. Device according to any of the preceding claims, wherein the protection element comprises at least one groove and wherein an elastic strip is arranged in the groove.

8. Device according to any of the preceding claims, wherein the at least one mount comprises a deformation zone.

9. Device according to claim 8, wherein the at least one mount has a rigid portion and a deformable portion.

10. Device according to claim 9, wherein the deformable portion comprises a collapsible chamber to absorb impact energy.

11. Device according to any of the claims 8 - 10, wherein the at least one mount is L-shaped.

12. Device according to claim 11, wherein the deformation zone is arranged at the intersection of the two legs of the L-shape.

13. Device according to claim 11, wherein the deformation zone comprises a concave outer surface.

14. Vehicle comprising a chassis and a device according to any of the preceding claims, wherein the device is mounted to the chassis.

15. Vehicle according to claim 14, wherein the chassis is integrated with a body work.
